Europäisches Patentamt

European Patent Office

Office européen des brevets

(19)

(11) Veröffentlichungsnummer: **0 092 161**
A2

(12) # EUROPÄISCHE PATENTANMELDUNG

(21) Anmeldenummer: **83103578.7**

(22) Anmeldetag: **13.04.83**

(51) Int. Cl.³: **F 24 J 3/02**

(30) Priorität: **20.04.82 DE 3214631**

(43) Veröffentlichungstag der Anmeldung: **26.10.83**
**Patentblatt 83/43**

(84) Benannte Vertragsstaaten: **AT BE CH DE FR GB IT LI LU NL SE**

(71) Anmelder: **Kellner, Bernd, Oskar-Messter-Strasse 16, D-8045 Ismaning (DE)**

(72) Erfinder: **Kellner, Bernd, Oskar-Messter-Strasse 16, D-8045 Ismaning (DE)**

(74) Vertreter: **WILHELMS & KILIAN Patentanwälte, Eduard-Schmid-Strasse 2, D-8000 München 90 (DE)**

(54) Sonnenkollektor.

(57) Bei einem evakuierbaren Sonnenkollektor mit einer Kollektorwanne (12), einer die Wanne dichtend abdeckenden strahlungsdurchlässigen Scheibe (1), einem unter der Scheibe angeordneten Absorber (3) und mit den Absorber durchsetzenden, einen geringen Querschnitt aufweisenden Stützelementen (7), welche die Scheibe bei Evakuierung des Kollektors an über ihre Fläche verteilten Stellen gegen die Wirkung des äußeren Luftdrucks punktuell von innen abstützen, ist vorgesehen, daß die Stützelemente (7) sich ihrerseits gegen den Boden der Kollektorwanne (12) anliegende Mittel abstützen, die eine einer Ausbildung von Abdrücken im Wannenboden entgegenwirkende Verteilung der von den Stützelementen auf den Wannenboden ausgeübten Kräfte bewirken.

EP 0 092 161 A2

ACTORUM AG

# WILHELMS & KILIAN
## PATENTANWÄLTE

EUROPEAN PATENT ATTORNEYS     EUROPÄISCHE PATENTVERTRETER     MANDATAIRES EN BREVETS EUROPÉENS

DR. ROLF E. WILHELMS
DR. HELMUT KILIAN

GEIBELSTRASSE 6
8000 MÜNCHEN 80

TELEFON (0 89) 47 40 73 *
TELEX    52 34 67 (wilp-d)
TELEGRAMME PATRANS MÜNCHEN
TELECOPIER gr. 2   (089) 222 066

PH 1445-EP

**0092161**

BERND KELLNER

8045 Ismaning

## Sonnenkollektor

Priorität: 20. April 1982 - Bundesrepublik Deutschland - P 32 14 631.0

Die Erfindung bezieht sich auf einen evakuierbaren Sonnenkollektor, mit einer Kollektorwanne, einer die Wanne dichtend abdeckenden strahlungsdurchlässigen Scheibe, einem unter der Scheibe angeordneten Absorber und mit den Absorber durchsetzenden, einen geringen Querschnitt aufweisenden Stützelementen, welche die Scheibe bei Evakuierung an über ihre Fläche verteilten Stellen gegen die Wirkung des äußeren Luftdrucks punktuell von innen abstützen.

Aus der deutschen Offenlegungsschrift 27 28 019 ist ein Sonnenkollektor bekannt, bei dem die stab- oder röhrchenförmigen Stützelemente direkt auf dem Kollektorboden, der typischerweise durch ein Blech einer Stärke von 1 bis 2 mm gebildet ist, aufruhen. Die dadurch nahezu punktuell auf den Kollektorboden einwirkenden Kräfte bewirken dessen plastische Verformung an den Stellen der Stützelemente, was dazu führt, daß sich diese mit der Zeit nach außen abzuzeichnen beginnen. Dies gibt dem Sonnenkollektor nicht nur den Anschein eines allmählichen Verschleißes, sondern führt auch dazu, daß sich die Statik, mit der die Kollektorscheibe abgestützt wird, mit der Zeit ändert. So löst sich auch etwa beim Belüften des Kollektors die Abdeckscheibe von den nach unten weggesackten Stützelementen, was umgekehrt beim erneuten Evakuieren des Kollektors dann dazu führen muß, daß die Scheibe nicht von vornherein von den Stützelementen unterfangen wird, sondern erst mit einem Aufprall gegen diese gezogen wird.

Hier sucht die Erfindung Abhilfe zu schaffen, wozu sie bei einem Kollektor der eingangs genannten Art vorsieht, daß die Stützelemente sich ihrerseits gegen gegen den Boden der Kollektorwanne anliegende Mittel abstützen, die eine einer Ausbildung von Abdrücken im Wannenboden entgegenwirkende Verteilung der von den Stützelementen auf den Wannenboden ausgeübten Kräfte bewirken.

Gemäß einer bevorzugten Ausgestaltung der Erfindung ist vorgesehen, daß die Mittel ein Blech, gegen das sich die Stützelemente abstützen, und eine zwischen dem Blech und dem Wannenboden vorgesehene Einlage aufweisen, welche unter den Abstützpunkten der Stützelemente Leerräume und im übrigen eine solche Dicke in Richtung der von den Stützelementen auf den Wannenboden ausgeübten Kräfte aufweist, daß das sich in die Leerräume unter dem Einfluß dieser Kräfte durchbiegende Blech den Wannenboden nicht oder mit einem nur geringen Anpreßdruck berührt. Die Leerräume sind hierbei vorzugsweise so gewählt, daß ihre die Stützelemente umgebenden Ränder in einem solchen Abstand zu den Andrückpunkten der Stützelemente liegen, daß sich das Blech unter der Einwirkung der Anpreßkräfte im wesentlichen ohne bleibende plastische Verformung elastisch verformen kann.

Vorzugsweise ist die Einlage dabei durch eine Gitterstruktur mit kreuzweise verlaufenden Gitterdrähten gebildet, wobei sich die Stützelemente über den Gitterleerräumen an dem Blech abstützen. Eine solche Anordnung ist äußerst wirkungsvoll und besonders einfach verfügbar.

Gemäß einer weiteren bevorzugten Ausgestaltung der Erfindung sind die Mittel durch ein mit Erhebungen profiliertes Blech gebildet, wobei die Stützelemente sich an den Erhebungen abstützen.

Eine bevorzugte Ausführungsform der Erfindung wird im folgenden anhand der beigefügten Zeichnung beschrieben. Auf dieser zeigt

Fig. 1 einen Sonnenkollektor in perspektivischer Explosionsdarstellung,

Fig. 2 eine Detailansicht des Absorbers,

Fig. 3 eine Detailansicht einer Quetschverschraubung zur dichtenden Durchführung eines Absorbersammelrohres durch die Absorberwanne,

Fig. 4 den Rohrleitungsaufbau des Absorbers, und

Fig. 5 eine Detailansicht der Anbringung der Kollektorabdeckscheibe an der Kollektorwanne.

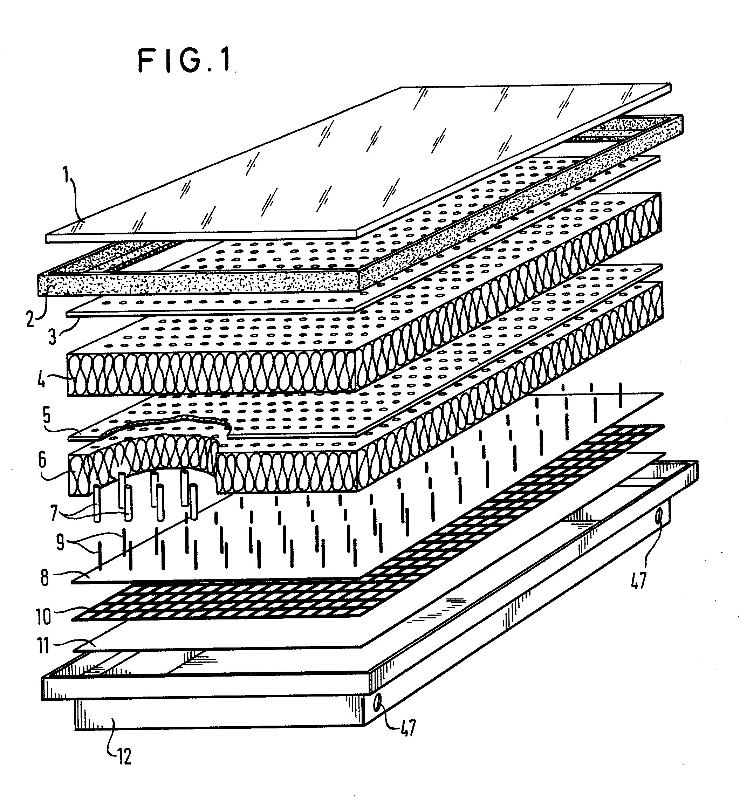

Gemäß Fig. 1 ist eine kastenförmige Absorberwanne 12 mit rechteckigem Grundriß vorgesehen, die sich an ihrem oberen Rand stufenförmig erweitert, so daß sich eine rahmenförmige Auflage für eine winkelförmige Dichtung 2 ergibt, auf der eine die Absorberwanne oben abschließende licht- bzw. strahlungsdurchlässige Glassplatte 1 aufruht. Die Dichtung 2 ist elastisch und so weich, daß sie beim Evakuieren des Kollektors auftretende Verformungen der typischerweise aus einem Blech einer Stärke von 1 bis 2 mm bestehenden Absorberwanne aufnehmeh und damit die Glasplatte gefährdende ungleichmäßige Spannungen von dieser fernhalten kann.

Auf dem Boden der Kollektorwanne ist eine Reflexionsfolie 11, etwa aus Aluminium, vorgesehen. Auf der Reflexionsfolie 11 ruht ein Metallgitter 10 mit einem quadratischen Rastermaß von einigen Zentimetern auf, wobei auf dem Metallgitter ihrerseits eine Metallplatte 8 aufruht, auf der in regelmäßiger Verteilung stabförmige Stützenhalter 9, etwa mit Hilfe einer Bolzenschweißmaschine, aufgeschweißt sind. Die Aufschweißungspunkte der Stützenhalter 9 und das Metallgitter 10 sind so aufeinander abgestimmt, daß die Stützenhalter 9 jeweils über den Gitterleerräumen, d.h. etwa in der Mitte der durch die Gitterdrähte gegebenden Rasterquadrate, zu liegen kommen. Auf die Stützenhalter 9 sind Stützröhrchen 7, etwa aus die Wärme schlecht leitendem Metall, aufgesteckt, deren Innendurchmesser auf den Durchmesser der Stützenhalter so abgestimmt ist, daß sie sich leicht aufstecken lassen, ohne übermäßig Spiel zu haben. Die gegen die Glasplatte 1 anliegenden Enden der Stützröhrchen sind, etwa durch Bördelung nach außen, gerundet, um keine Beschädigungen der Glasscheibe herbeizuführen und Kantenbelastungen zu vermeiden (Selbsteinrichtung der Stützröhrchen).

Die Stützenhalter zusammen mit den Stützröhrchen durchsetzen eine auf das Blech 8 gedrückte Isoliermatte, etwa aus Glaswolle, auf die wiederum eine weitere Reflexionsfolie 5, etwa aus Aluminium, und eine weitere Isoliermatte 4, etwa aus Glaswolle, gelegt sind. Auch die Reflexionsfolie 5 und die Isoliermatte 4 werden von dem Stützaufbau aus Stützenhalter 9 und Stützröhrchen 7 durchsetzt. Das gleiche gilt für einen unter der Glasplatte 1 liegenden, in Fig. 1 nur schematisch gezeigten Absorber 3.

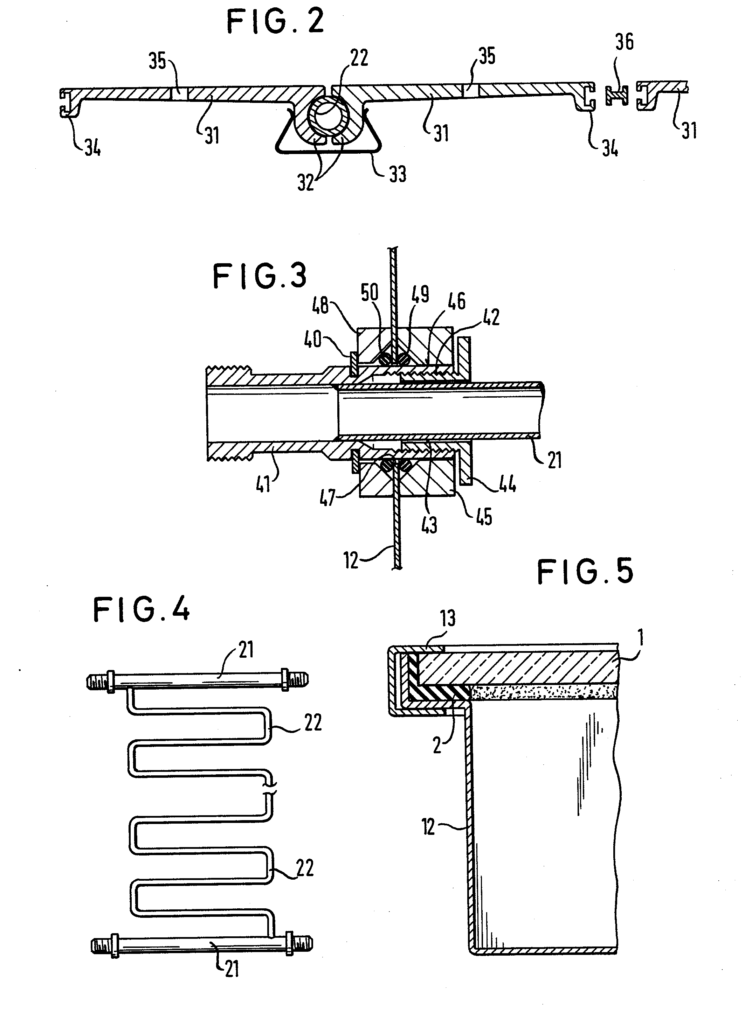

Wie aus den Fig. 2 und 4 ersichtlich, enthält der Absorber auf seiner Unterseite eine meanderförmig angelegte

-5-

Rohrleitung 22, vorzugsweise aus Kupfer, die an ihren beiden Enden in Sammelrohre 21 einmündet, die die Kollektorwanne 12 in den langen Seitenwänden in Löchern 47 im Bereich der Ecken durchsetzen und über die das Wärmetransportmedium durch die meanderförmige Rohrleitung 22 geleitet wird. Wie sich aus Fig. 2 ergibt, sind an den parallel zu den kurzen Seiten der Kollektorwanne 12 verlaufenden Strecken der Rohrleitung 22 von zwei Seiten her jeweils eine parallel zu den kurzen Seiten der Kollektorwanne 12 verlaufende streifenförmige Metallplatte, vorzugsweise aus Aluminium, angebracht, die unterhalb ihrer Ebene einen Fortsatz 32 mit einer dem Querschnitt der Rohrleitung 22 angepaßten halbkreisförmigen Ausnehmung aufweist. Auf diese Weise steht das Rohr 22 von zwei Seiten her jeweils mit einer Platte 31 in gut wärmeleitender Verbindung, wobei ein klammerförmiges Bügelelement 33 die Platten 31 am Rohr andrückt. An der dem Rohr 22 abgekehrten Längskante der Platte 31 ist wiederum unter ihrer Ebene ein weiterer Fortsatz 34 vorgesehen, der eine T-förmige Ausnehmung aufweist. An diese Kante einer Platte 31 schließt mit einer spiegelbildlich identischen Ausbildung an dieser Stelle eine weitere Platte 31 an, die mit ihrer anderen Längskante an dem benachbarten parallel zur kurzen Seite der Kollektorwanne 12 verlaufenden Zug der Rohrleitung 22 in der gleichen Weise wie oben beschrieben angebracht ist. Die beiden T-förmigen Ausnehmungen benachbarter Platten 31 in den Fortsätzen 34 werden durch eine Doppel-T-Schiene 36 mit den Ausnehmungen entsprechendem Querschnitt miteinander locker und daher in schlechtem Wärmeleitungskontakt verbunden. Auf diese Weise ergibt sich eine in sich bewegliche geschlossene Absorberfläche, unter der die Rohrleitungen 22 und die Sammelleitungen 21, auf denen die Endplatten der Platten 31 aufliegen, verlaufen. Der Querschnitt der Platten 31 ist im Sinne eines Wärmestroms zu den Rohrleitungen 22 so gewählt, daß sie im Bereich dieser Rohrleitungen 22 dicker als im Bereich der Doppel-T-Schienen sind. Die Platten 31 weisen in auf die Stützenhalter 9 abgestimmten Lagen Bohrungen 35 für einen berührungsfreien Durchtritt derselben und der auf ihnen sitzenden Stützröhrchen 7 auf. Über die Sammelrohre können mehrere Kollektoren parallel zusammengeschlossen werden.

Wie bereits erwähnt, ist die Kollektorwanne 12 durch eine durch die Stützröhrchen 7 abgestützte strahlungsdurchlässige Glasscheibe 1 abgedeckt, die über eine entsprechend geformte elastische Dichtung 2 auf der Randstufe der Kollektorwanne 12 aufruht. Die Kollektorwanne 12, die Dichtung 2 und die Glasscheibe 1 werden durch ein umlaufendes U-Profil 13 zusammengespannt (vgl. Fig. 5).

Da der beschriebene Sonnenkollektor (über einen auf der Zeichnung nicht sichtbaren Absaugstutzen) evakuierbar ist , muß der Anschluß zwischen Glasscheibe 1 und Kollektorwanne 12 luftdicht sein, was auch für die Durchführung der Sammelrohre 21 durch die Kollektorwanne 12 gilt.

Fig. 3 zeigt hier eine Quetschverschraubung für die Endstücke der Sammelrohre 21 in Bezug auf die Kollektorwanne 12. Das Sammelrohr 21 ist in einen Rohrstutzen 41 eingeschweißt, der sich auf der einen Seite mit Innengewinde 42 unter Einhaltung eines ringförmigen Zwischenraums 43 um das Sammelrohr 21 legt. In das Gewinde 42 wird eine Ringmutter 44 mit Außengewinde geschraubt, die gegen einen Ring 45 drückt, der auf einem zylindrischen Außenmantel 46 des Rohrstutzens 41 verschiebbar ist. Dieser Ring liegt im montierten Zustand, wenn der Rohrstutzen 41 eine in der Wand der Absorberwanne 12 vorgesehene Bohrung 47 durchsetzt auf der einen Seite der Absorberwanne. Auf der anderen Seite der Wanne liegt spiegelbildlich ein im wesentlichen gleich aufgebauter Ring 48, der auf seiner der Wannenwand abgekehrten Seite durch einen Sicherungsring 40 daran gehindert ist, sich von der Wand wegzubewegen. Die Ringe 45 und 48 weisen auf ihren der Wand zugekehrten Seiten konische Flächen auf, durch die auf beiden Seiten der Wand liegende Dichtringe 49 und 50 verquetscht werden, wenn die gegen den Ring 45 drückende Mutter 44 mit dem Sicherungsring 49 als ein ein Ausweichen des Ringes 48 verhinderndes Widerlager angezogen wird.

Dieser Aufbau hat den Vorteil, daß er durch Abnehmen des Sicherungsrings 49 und Lösen der Mutter 44 so weit zerlegbar und verschiebbar ist, daß er ein Durchstecken der Enden der Sammelrohre durch die Bohrungen 47 in einer schwingenden Bewegung (d.h. zuerst durch die Bohrungen der einen Wannenlängswand und dann durch die Bohrungen der gegenüberliegenden Wannenlängswand) nicht behindert.

Beim Evakuieren des Kollektors drückt die abdeckende Glasscheibe 1 unter dem Druck der Außenluft gegen die Stützröhrchen 7, so daß die durch ein Blech gebildete Metallplatte 8 punktuell im Bereich dieser Stützröhrchen belastet wird. Die Angriffspunkte der Stützröhrchen an der Metallplatte 8 sind auf der anderen Seite dieser Metallplatte von dem quadratischen Raster des Metallgitters 9 umrahmt. Die Maschenweite ist dabei so groß gewählt, daß sich die Metallplatte 8 nach Art einer Membran elastisch in diese Rahmen einwölben kann, ohne den darunterliegenden Boden der Kollektorwanne (bzw. die darauf liegende Reflexionsfolie) mit nennenswerten Kräften oder überhaupt zu berühren. Hierzu weisen die Drähte des verwendeten Gitters 10 eine Höhe von einigen Millimetern auf.

Der beschriebene und dargestellte Sonnenkollektor hat einen Grundriß von etwa 1 x 2 Metern. Die Stärke der Wanne 12 und der Metallplatte 8 beträgt, je nach verwendetem Material, etwa 1-2 Millimeter.

Der Absorber nach den Figuren 2 und 4 wurde zwar in Verbindung mit einem evakuierbaren Sonnenkollektor beschrieben, er kann in gleicher Weise jedoch auch Teil eines nicht evakuierbaren Sonnenkollektors sein. Ein solcher Sonnenkollektor kann, was die Wanne, Abdeckscheibe und Isolationsschichten anbelangt, gleich aufgebaut sein, wie der beschriebene, es entfällt aber der Stützaufbau für die Abdeckscheibe, so daß in den Absorberplatten 31 die Bohrungen 35 entfallen können.

Anstelle einer meanderförmigen Rohrleitung 22 können auch mehrere im wesentlichen parallel zu einander und senkrecht zu den Sammelrohren 21 verlaufende Rohrleitungen vorgesehen sein. Die Richtung der Platten 31 ist dann um 90° gedreht.

Ebenso wie der Absorber kann auch die Quetschverschraubung der Fig. 3 bei einem nicht evakuierbaren Sonnenkollektor Anwendung finden.

KI/eh

Patentansprüche


1. Evakuierbarer Sonnenkollektor, mit einer Kollektorwanne (12), einer die Wanne dichtend abdeckenden strahlungsdurchlässigen Scheibe (1), einem unter der Scheibe angeordneten Absorber (3) und mit den Absorber durchsetzenden, einen geringen Querschnitt aufweisenden Stützelementen (7),
welche die Scheibe bei Evakuierung des Kollektors an über
ihre Fläche verteilten Stellen gegen die Wirkung des äußeren Luftdrucks punktuell von innen abstützen, dadurch
g e k e n n z e i c h n e t ,   daß die Stützelemente (7)
sich ihrerseits gegen gegen den Boden der Kollektorwanne (12)
anliegende Mittel abstützen, die eine einer Ausbildung von
Abdrücken im Wannenboden entgegenwirkende Verteilung der
von den Stützelementen auf den Wannenboden ausgeübten Kräfte bewirken.


2. Sonnenkollektor nach Anspruch 1, dadurch   g e -
k e n n z e i c h n e t ,   daß die Mittel ein Blech
(8), gegen das sich die Stützelemente (7) abstützen, und eine zwischen dem Blech und dem Wannenboden vorgesehene Einlage aufweisen,   welche unter den Abstützpunkten der
Stützelemente Leerräume und im übrigen eine solche Dicke in
Richtung der von den Stützelementen auf den Wannenboden ausgeübten Kräfte aufweist, daß das sich in die Leerräume unter
dem Einfluß dieser Kräfte durchbiegende Blech den Wannenboden nicht oder mit einem nur geringen Anpreßdruck berührt.


3. Sonnenkollektor nach Anspruch 2, dadurch   g e -
k e n n z e i c h n e t ,   daß die Einlage durch eine Gitterstruktur (10) mit kreuzweise verlaufenden Gitterdrähten
gebildet ist, wobei sich die Stützelemente (7) über den Gitterleerräumen an dem Blech (8) abstützen.

-2-

4. Sonnenkollektor nach Anspruch 1, dadurch  g e -
k e n n z e i c h n e t ,    daß die Mittel durch ein mit Erhebungen profiliertes Blech gebildet sind, wobei die Stützelemente (7) sich an den Erhebungen abstützen.

5. Sonnenkollektor mit einem wannenförmigen Körper (12),
einer den wannenförmigen Körper abdeckenden strahlungsdurchlässigen Scheibe (2) und einem im wannenförmigen Körper
unter der Scheibe liegenden Absorber (3), dadurch  g e -
k e n n z e i c h n e t ,    daß der Absorber eine von einem
Wärmetransportmedium zu durchströmende Rohrleitung (22),
welche im wesentlichen parallel zueinander verlaufende Abschnitte aufweist, und im wesentlichen parallel zueinander
verlaufende, über der Rohrleitung liegende und im wesentlichen eine geschlossene Fläche ähnlicher Ausdehnung wie
der Kollektor bildende streifenförmige Platten (31) umfaßt, wobei jeweils zwei streifenförmige Platten von entgegengesetzten Seiten mit einem Rohrleitungsabschnitt in
gutem thermischem Kontakt klemmend verbunden sind, und wobei
eine mit einem der Rohrleitungsabschnitte verbundene streifenförmige Platte und eine mit einem benachbarten Rohrleitungsabschnitt verbundene benachbarte streifenförmige Platte einen
schlechten thermischen Kontakt bildend lose miteinander
verbunden sind.

6. Sonnenkollektor nach Anspruch 5, dadurch  g e -
k e n n z e i c h n e t ,    daß die streifenförmigen Platten (31) sich zu den Rohrleitungsabschnitten, mit denen sie
klemmend verbunden sind, hin keilförmig verdickend ausgebildet sind.

7. Sonnenkollektor nach Anspruch 6, dadurch  g e -
k e n n z e i c h n e t ,    daß die streifenförmigen Platten
(31) unter ihrer Ebene einen sich längs einer Kante erstrekkenden Fortsatz (32) aufweisen, welcher eine dem Querschnitt

-3-

des Rohrleitungsabschnitts, mit welchem sie jeweils verbunden sind, angepaßte Ausnehmung ausbildet.

8. Sonnenkollektor nach Anspruch 7, dadurch  g e -
k e n n z e i c h n e t ,   daß die streifenförmigen Platten
(31) unter ihrer Ebene an der der Seite, an welcher sie jeweils mit einem Rohrleitungsabschnitt klemmend verbunden
sind, abgekehrten Kante einen weiteren Fortsatz (34) aufweisen, welcher eine T-förmige Ausnehmung ausbildet, und daß
eine zwei benachbarte, an verschiedene Rohrleitungsabschnitte geklemmte streifenförmige Abschnitte verbindende Doppel-
T-Schiene (36) vorgesehen ist, welche den schlechten thermischen Kontakt bildend locker in die T-förmige Ausnehmung
eingreift.

# FIG.1

FIG. 2

FIG.3

FIG.4

FIG.5